# EUROPÄISCHE PATENTSCHRIFT

(11) **EP 0 702 989 B1**
(45) Veröffentlichungstag und Bekanntmachung des Hinweises auf die Patenterteilung: **23.09.1998**
(21) Anmeldenummer: 95108059.7
(22) Anmeldetag: 26.05.1995
(51) Int. Cl.: A63H 19/22, A63H 19/10

(54) **Achse für schienengebundene elektrische Spielzeugfahrzeuge, insbesondere Eisenbahnfahrzeuge**
Axle for electric toy rail vehicles, especially railway vehicles
Essieu pour véhicules électriques jouets sur rails, en particulier véhicules de chemins de fer

(30) Priorität: 07.09.1994 DE 9414473 U
(43) Veröffentlichungstag der Anmeldung: 27.03.1996
(73) Patentinhaber: Ernst Paul Lehmann Patentwerk, D-90475 Nürnberg (DE)
(72) Erfinder: Richter, Wolfgang, D-90455 Nürnberg (DE)
(74) Vertreter: Matschkur, Lindner Blaumeier Patent- und Rechtsanwälte

(56) Entgegenhaltungen:
- DE-U- 8 709 179
- GB-A- 610 108

## Beschreibung

Die Erfindung betrifft eine Achse für schienengebundene elektrische Spielzeugfahrzeuge, insbesondere Eisenbahnfahrzeuge, mit einem vorzugsweise aus Kunststoff bestehenden Achskörper und daran endseitig mittels Kugellagern drehbar angeordneten, stromaufnehmenden Radkränzen, wobei die Kugellager auf am Achskörper ausgebildete Aufsteckabschnitte gesteckt sind. Eine solche Achse ist aus GB-A-610 108 bekannt.

Bei schienengebundenen Spielzeugfahrzeugen erfolgt die Stromaufnahme für den das Fahrzeug antreibenden Elektromotor über die Radkränze, die den Strom von den Schienen abnehmen. Zur elektrischen Verbindung der Radkränze mit dem Elektromotor weisen die bisher bekannten Achsen an der Achse angeordnete Verbindungskabel auf, die zum Elektromotor zu führen sind. Diese Verbindungskabel sind mehr oder weniger fest durch Verlöten mit den Lagern elektrisch leitend verbunden und zumindest teilweise am Achskörper verklebt, damit sie gemeinsam zum Elektromotor abgeführt werden können. Neben der mangelhaften Befestigung der Drähte sowohl an den Lagern als auch am Achskörper selbst, die bei geringer mechanischer Beanspruchung zum Ablösen bzw. Abreißen führt, ist ein weiterer Nachteil darin zu sehen, daß die Anschlußdrähte umständlich zum Elektromotor zu führen sind. Weiterhin ist eine Universalverwendung der Achse nicht möglich, da eine einfache Zerlegung zur Entfernung der Kabel und damit eine Umwandlung der Stromsammelachse in eine normale Achse nicht möglich ist.

Der Erfindung liegt somit die Aufgabe zugrunde, eine Achse der eingangs genannten Art derart auszugestalten, daß die Stromabnahme von der Achse und die Verbindung zum elektrischen Antriebsmotor bei gleichzeitiger multifunktionaler Verwendbarkeit der Achse vereinfacht ist.

Zur Lösung dieser Aufgabe ist bei einer Achse mit den eingangs genannten Merkmalen erfindungsgemäß vorgesehen, daß am Achskörper metallische Steckkontaktstifte angeordnet sind, die mit den Kugellagern in elektrisch leitender Verbindung stehen und zur Kontaktierung für die Stromabnahme vom Achskörper vorzugsweise radial abstehen. Durch die Anbringung der nur ein kurzes Stück vom Achskörper abstehenden Steckkontaktstifte ist somit eine einfache Kontaktierung lediglich durch Aufstecken entsprechender Gegenstecker möglich. Gleichermaßen ist die Achse dadurch auch als gewöhnliche Achse einsetzbar, da anstelle der bisher nachteiligen Komplettverkabelung lediglich die Steckkontaktstifte vorgesehen sind, die auch bei normaler Achsverwendung nicht stören. Dabei hat es sich als zweckmäßig erwiesen, daß erfindungsgemäß die Steckkontaktstifte im wesentlichen eine L-Form aufweisen, wobei ein Schenkel im wesentlichen achsparallel verlaufend zum Kugellager geführt ist und der andere den radial abstehenden Kontaktteil bildet. Der Steckkontaktstift bzw. der achsparallele Schenkel können ferner in direkter Anlage, das Kugellager kontaktierend, angeordnet sein. Jedoch hat es sich zur Erzielung eines dauerhaften und einen niedrigen Kontaktwiderstand aufweisenden Kontaktes als äußerst vorteilhaft herausgestellt, wenn erfindungsgemäß der Steckkontaktstift bis in den Aufsteckabschnitt derart geführt ist, daß das aufgesteckte Kugellager ihn kontaktierend übergreift, wobei zur exakten Führung und Fixierung des Steckkontaktstiftes dieser in einer am Achskörper und/oder gegebenenfalls am Aufsteckabschnitt ausgebildeten Nut geführt sein kann.

Zur weiteren Verbesserung des Kontaktes Steckkontaktstift-Kugellager kann im Rahmen der Erfindung ferner vorgesehen sein, daß der in der am Aufsteckabschnitt ausgebildeten Nut geführte Schenkelabschnitt derart geformt ist, daß seine Oberseite unter Ermöglichung eines Formschlusses bei aufgestecktem Kugellager in den Aufsteckabschnitt integriert ist, wobei erfindungsgemäß die Oberseite des Schenkelabschnitts entsprechend der Wölbung des Aufsteckabschnitts geformt sein kann, so daß dadurch die Kontaktfläche weiter vergrößert wird. Darüber hinaus kann erfindungsgemäß der achsparallele Schenkel vorzugsweise mit seinem freien Ende federnd in der Nut gelagert sein, so daß dadurch zusätzlich zum Formschluß durch die Federandruckkraft der Kontakt verbessert wird.

Für eine sichere Fixierung des Kontaktstifts am Achskörper und/oder am Aufsteckabschnitt und gegebenenfalls in der Nut kann dieser erfindungsgemäß daran unlösbar angeordnet sein, wozu sich vorzugsweise ein Verkleben oder gegebenenfalls ein Einspritzen direkt in den aus Kunststoff bestehenden Achskörper als zweckmäßig erwiesen hat. Alternativ dazu und zur Ermöglichung der Zerlegbarkeit der Achse zwecks Entnahme des Steckkontaktstiftes kann auf Basis der Erfindung ein den Steckkontaktstift klemmend halternder Haltering vorgesehen sein, der auf den gegebenenfalls verlängert ausgebildeten Aufsteckabschnitt lösbar aufzustecken ist und der den Steckkontaktstift am achsparallelen Schenkel übergreifend fixiert. Dabei ist der Haltering in seiner Länge selbstverständlich derart bemessen, daß der achsparallele Schenkel nur auf ein kurzes Stück übergriffen wird und noch ausreichend Schenkellänge zur Kugellagerkontaktierung vorhanden ist. Zur sicheren Fixierung hat es sich als zweckmäßig erwiesen, einen im Anschluß an den Aufsteckabschnitt ausgebildeten zweiten Aufsteckabschnitt größeren Durchmessers für den Haltering vorzusehen.

Da sowohl beim Aufstecken der Radkränze als auch der Halteringe auf den Steckkontaktstift ein entsprechender axialer Druck wirkt, aufgrund welchem ein achsparalleles Verschieben möglich ist, können in weiterer Erfindungsausgestaltung ferner am Achskörper angeordnete, die davon abstehenden Schenkel der Steckkontaktstifte gegen den beim Aufstecken der Radkränze und/oder gegebenenfalls der Halteringe wirkenden Druck gegenlagernde Vorsprünge vorgesehen sein, die vorzugsweise mit einer den abstehenden Schenkel führenden Nut versehen sein können. Mittels der Vorsprünge und gegebenenfalls der Nuten ist damit der Steckkontaktstift sicher fixiert, so daß er sowohl beim Aufstecken als auch beim Abziehen in seiner Position verbleibt.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: eine Aufsicht auf eine erfindungsgemäße Achse,
- Fig. 2: eine teilweise Schnittansicht der Achse aus Fig. 1, und
- Fig. 3: eine teilweise Aufsicht auf den Achskörper im Bereich der Aufsteckabschnitte.

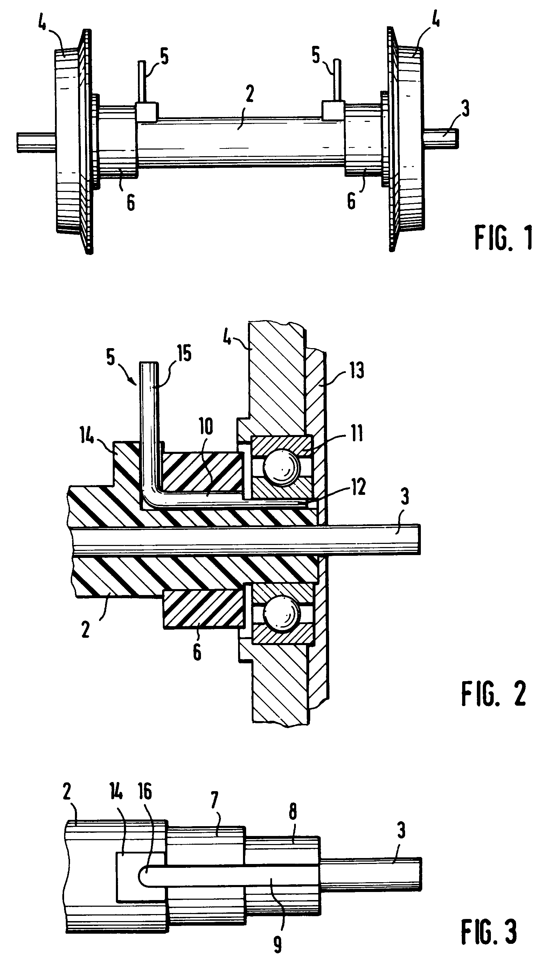

Fig. 1 zeigt eine Achse 1, bestehend aus dem aus Kunststoff gebildeten Achskörper 2 mit integriertem, vorzugsweise metallischen Mittelträger 3. Endseitig am Achskörper 2 sind die auf den Schienen geführten und den Strom abnehmenden Radkränze 4 kugelgelagert angeordnet. Ferner sind Fig. 1 die beiden Steckkontaktstifte 5, die, wie bezüglich Fig. 2 näher beschrieben werden wird, in elektrisch leitendem Kontakt mit den Radkränzen 4 stehen, zu entnehmen. Die Steckkontaktstifte 5, auf welche zwecks Kontaktierung zur Stromabnahme für den Elektromotor entsprechende Gegenstecker aufzustecken sind, werden mittels je eines Halteringes 6 gehaltert.

Einzelheiten sowohl betreffend den Steckkontaktstift als auch dessen Halterung und die Kontaktierung sind der in Fig. 2 gezeigten Schnittansicht zu entnehmen. Der Achskörper 2 weist, vgl. hierzu Fig. 3, einen ersten Aufsteckabschnitt verjüngten Durchmessers 8 und einen zweiten Aufsteckabschnitt mit etwas größerem Durchmesser 7 auf. Ausgehend vom Achskörperbereich des größten Durchmessers läuft eine Nut 9 bis zum Ende des ersten Aufsteckabschnittes 8, in welcher der Steckkontaktstift 5, vgl. Fig. 2, aufgenommen ist. Zur Halterung des Steckkontaktstiftes 5 ist der Haltering 6, dessen Innendurchmesser zur Erzielung einer festen, jedoch noch lösbaren Verbindung im wesentlichen dem Außendurchmesser des Aufsteckabschnittes 7 entspricht, auf diesen Aufsteckabschnitt 7 aufgeschoben, wobei er gleichzeitig den in der Nut 9 verlaufenden achsparallelen Schenkel 10 des Steckkontaktstiftes 5 klemmend übergreift, so daß dieser in seiner Position festgelegt ist. Zur Kontaktierung wird der Radkranz 4 mit dem eingepaßten Kugellager 11 auf den ersten Aufsteckabschnitt 8 aufgesteckt, wobei zur Erzielung eines elektrischen Kontaktes mit dem achsparallelen Schenkel 10 das Kugellager 11 den Schenkel 10 in einem abgeflachten Bereich 12 formschlüssig übergreift. Der abgeflachte Bereich 12 ist zur Integration in den ersten Aufsteckabschnitt 8 und zur Erzielung einer möglichst großen Kontaktfläche mit dem Kugellager 11 entsprechend der Wölbung des Aufsteckabschnitts 8 (und damit des aufliegenden Kugellagers) profiliert. Seitlich wird der Radkranz 4 von einer Scheibe 13 zur Abdeckung des Kugellagers abgeschlossen.

Da sowohl beim Aufstecken des Halteringes 6 als auch nachfolgend des Radkranzes 4 samt Kugellager 11 auf den Steckkontaktstift 5 ein axialer Druck wirkt, dem der Steckkontaktstift 5 durch achsparalleles Verrutschen nachgeben würde, ist zur Verhinderung eines Verrutschens ein Vorsprung 14 vorgesehen, der als Gegenlager dient. Dieser Vorsprung 14 weist eine den radial abstehenden Schenkel 15 des Steckkontaktstiftes 5 aufnehmende Nut 16 auf, in welcher dieser Schenkel 15 geführt ist, wodurch neben einer Verhinderung eines achsparallelen Verrutschens auch ein Drehen des Steckkontaktstiftes 5 mit dem achsparallelen Schenkel 10 als Drehachse verhindert wird. Der Steckkontaktstift 5 ist damit in seiner Lage exakt und bezüglich der sowohl beim Aufstecken als auch beim Abziehen der Einzelteile wirkenden Kräften sicher fixiert, was insbesondere dahingehend von Vorteil ist, als die Achse 1 je nach Anwendungsfall in einer vorbestimmten Lage, in welcher die Steckkontaktstifte 5 in einer bestimmten Stellung ausgerichtet sind, eingebaut werden kann, so daß stets die Einbaustellung für die Steckkontaktstifte 5 gewählt werden kann, die ein einfaches Kontaktieren ermöglicht.

## Patentansprüche

1. Achse für schienengebundene elektrische Spielzeugfahrzeuge, insbesondere Eisenbahnfahrzeuge, mit einem vorzugsweise aus Kunststoff bestehenden Achskörper (2) und daran endseitig mittels Kugellagern (11) drehbar angeordneten, stromaufnehmenden Radkränzen (4), wobei die Kugellager (11) auf am Achskörper (2) ausgebildete Aufsteckabschnitte (8) gesteckt sind, dadurch gekennzeichnet, daß am Achskörper (2) metallische Steckkontaktstifte (5) angeordnet sind, die mit den Kugellagern (11) in elektrisch leitender Verbindung stehen und zur Kontaktierung für die Stromabnahme vom Achskörper (2) vorzugsweise radial abstehen.

2. Achse nach Anspruch 1, dadurch gekennzeichnet, daß die Steckkontaktstifte (5) im wesentlichen eine L-Form aufweisen, wobei ein Schenkel (10) im wesentlichen achsparallel verlaufend zum Kugellager (11) geführt ist.

3. Achse nach Anspruch 1 oder 2, dadurch gekennzeichnet, daß der Steckkontaktstift (5) bis in den Aufsteckabschnitt (8) derart geführt ist, daß das aufgesteckte Kugellager (11) ihn kontaktierend übergreift.

4. Achse nach einem der Ansprüche 1 bis 3, dadurch gekennzeichnet, daß der Steckkontaktstift (5) in einer am Achskörper (2) und/oder gegebenenfalls am Aufsteckabschnitt (8) ausgebildeten Nut (9) geführt ist.

5. Achse nach Anspruch 4, dadurch gekennzeichnet, daß der in der am Aufsteckabschnitt (8) ausgebildeten Nut (9) geführte Schenkelabschnitt (12) derart geformt ist, daß seine Oberseite unter Ermöglichung eines Formschlusses bei aufgestecktem Kugellager (11) in den Aufsteckabschnitt (8) integriert ist.

6. Achse nach Anspruch 5, dadurch gekennzeichnet, daß die Oberseite des Schenkelabschnitts (12) entsprechend der Wölbung des Aufsteckabschnitts (8) geformt ist.

7. Achse nach einem der Ansprüche 4 bis 6, dadurch gekennzeichnet, daß der achsparallele Schenkel vorzugsweise mit seinem freien Ende federnd in der Nut gelagert ist.

8. Achse nach einem der vorangehenden Ansprüche, dadurch gekennzeichnet, daß der Steckkontaktstift am Achskörper und/oder am Aufsteckabschnitt und gegebenenfalls in der Nut unlösbar vorzugsweise verklebt ist.

9. Achse nach einem der Ansprüche 1 bis 8, gekennzeichnet durch einen auf den gegebenenfalls verlängert ausgebildeten Aufsteckabschnitt lösbar aufzusteckenden, den Steckkontaktstift (5) klemmend halternden Haltering (6).

10. Achse nach Anspruch 9, gekennzeichnet durch einen im Anschluß an den Aufsteckabschnitt (8) ausgebildeten zweiten Aufsteckabschnitt (7) größeren Durchmessers für den Haltering (6).

11. Achse nach einem der Ansprüche 2 bis 10, gekennzeichnet durch am Achskörper (2) angeordnete, die davon abstehenden Schenkel (15) der Steckkontaktstifte (5) gegen den beim Aufstecken der Radkränze (4) und/oder gegebenenfalls der Halteringe (6) wirkenden Druck gegenlagernde Vorsprünge (14).

12. Achse nach Anspruch 11, dadurch gekennzeichnet, daß die Vorsprünge (14) mit einer den abstehenden Schenkel (15) führenden Nut (16) versehen sind.

## Claims

1. Axle for electric toy rail vehicles, in particular railway vehicles, having an axle body (2) preferably consisting of plastics material and current-taking wheel rims (4) disposed against the end thereof rotatably by means of ball bearings (11), which are mounted on mounting sections (8) formed on the axle body (2), characterised in that metal plug-contact pins (5) are disposed on the axle body (2), are electrically connected to the ball bearings (11) and project preferably radially from the axle body (2) for contact for the current take-off from the axle body (2).

2. Axle according to claim 1, characterised in that the plug-contact pins (5) have a substantially L-shaped form, wherein a shank (10) is guided substantially axially parallel to the ball bearing (11).

3. Axle according to claim 1 or 2, characterised in that the plug-contact pin is so guided into the mounting section (8) that the mounted ball bearing (11) overlaps the same in a contact-making manner.

4. Axle according to one of claims 1 to 3, characterised in that the plug-contact pin (5) is guided in a groove (9) formed on the axle body (2) and/or optionally on the mounting section (8).

5. Axle according to claim 4, characterised in that the shank section (12) guided in the groove (9) formed on the mounting section (8) is so formed that its upper face is incorporated into the mounting section (8), permitting positive locking when the ball bearing (11) is incorporated into the mounting section (8).

6. Axle according to claim 5, characterised in that the upper face of the shank section (12) is formed according to the curvature of the mounting section (8).

7. Axle according to one of claims 4 to 6, characterised in that the axially parallel shank is preferably mounted with its free end resiliently in the groove.

8. Axle according to one of the preceding claims, characterised in that the plug-contact pin is preferably adhered to the axle body and/or the mounting section and optionally non-detachably in the groove.

9. Axle according to one of claims 1 to 8, characterised by a holding ring (6) which holds the plug-contact pin (5) in a clamping manner on the mounting section which is optionally lengthened.

10. Axle according to claim 9, characterised by a second mounting section (7) of larger diameter for the holding ring (6) and formed so as to adjoin the mounting section (8).

11. Axle according to one of claims 2 to 10, characterised by projections (14) disposed on the axle body (2) and bearing against the shanks (15) of the contact pins (8) projecting therefrom against the pressure acting upon mounting of the wheel rims (4) and/or optionally the holding rings (6).

12. Axle according to claim 11, characterised in that the projections (14) are provided with a groove (16) guiding the projecting shanks (15).

## Revendications

1. Essieu pour des véhicules miniatures électriques sur rails, notamment des véhicules ferroviaires, comportant un corps d'essieu (2), de préférence en matière plastique, et des jantes (4) qui sont montées à rotation sur les extrémités du corps d'essieu, au moyen de roulements à billes (11), et reçoivent le courant, les roulements à billes (11) étant alors emmanchés sur des sections d'emmanchement (8) formées sur le corps d'essieu (2), caractérisé en ce que sur le corps d'essieu (2) sont disposées des broches de contact enfichables (5), qui sont reliées d'une manière électriquement conductrice aux roulements à billes (11) et font saillie, de préférence radialement, du corps d'essieu (2) en vue de l'établissement du contact pour le prélèvement de courant.

2. Essieu selon la revendication 1, caractérisé en ce que les broches de contact enfichables (5) présentent sensiblement une forme en L, dont une branche (10) est guidée jusqu'au roulement à billes (11) en étant sensiblement parallèle à l'axe.

3. Essieu selon la revendication 1 ou 2, caractérisé en ce que la broche de contact enfichable (5) est guidée jusque dans la section d'emmanchement (8) de telle sorte que le roulement à billes emmanché (11) s'engage sur cette broche en étant en contact avec elle.

4. Essieu selon l'une des revendications 1 à 3, caractérisé en ce que la broche de contact enfichable (5) est guidée dans une rainure (9) formée dans le corps d'essieu (2) et/ou éventuellement dans la section d'emmanchement (8).

5. Essieu selon la revendication 4, caractérisé en ce que le tronçon de branche (12), qui est guidé dans la rainure (9) formée dans la section d'emmanchement (8), est doté d'une configuration telle, que sa face supérieure soit intégrée dans la section d'emmanchement (8) tout en permettant une liaison par formes complémentaires lorsque le roulement à billes (11) est emmanché.

6. Essieu selon la revendication 5, caractérisé en ce que la face supérieure du tronçon de branche (12) est dotée d'une configuration correspondant au cintrage de la section d'emmanchement (8).

7. Essieu selon l'une des revendications 4 à 6, caractérisé en ce que la branche parallèle à l'axe est montée élastiquement, de préférence par son extrémité libre, dans la rainure.

8. Essieu selon l'une des revendications précédentes, caractérisé en ce que la broche de contact enfichable est de préférence collée de façon inamovible sur le corps d'essieu et/ou sur la section d'emmanchement et éventuellement dans la rainure.

9. Essieu selon l'une des revendications 1 à 8, caractérisé par une bague de retenue (6), destinée à être emmanchée de façon amovible sur la section d'emmanchement, éventuellement dotée d'un prolongement, et retenant par blocage la broche de contact enfichable (5).

10. Essieu selon la revendication 9, caractérisé par une deuxième section d'emmanchement (7), formée en continu avec la section d'emmanchement (8) et possédant un diamètre supérieur, pour la bague de retenue (6).

11. Essieu selon l'une des revendications 2 à 10, caractérisé par des appendices saillants (14), qui sont disposés sur le corps d'essieu (2) et qui supportent les branches (15), faisant saillie de ce dernier, des broches de contact enfichables (5) à l'encontre de la pression qui agit lors de l'emmanchement des jantes (4) et/ou éventuellement des bagues de retenue (6).

12. Essieu selon la revendication 11, caractérisé en ce que les appendices saillants (14) sont pourvus d'une rainure (16) qui guide la branche saillante (15).
